Europäisches Patentamt

European Patent Office

Office européen des brevets

(19)

(11) Publication number: **0 420 676 A2**

(12) # EUROPEAN PATENT APPLICATION

(21) Application number: **90310654.0**

(22) Date of filing: **28.09.90**

(51) Int. Cl.5: **F16B 12/44**

(30) Priority: **29.09.89 GB 8922008**

(43) Date of publication of application:
**03.04.91 Bulletin 91/14**

(84) Designated Contracting States:
**AT BE CH DE DK ES FR GB GR IT LI LU NL SE**

(71) Applicant: **AMBASSADOR MANAGEMENT AND DESIGN LIMITED**
**65 Shefford Road**
**Clifton, Bedfordshire(GB)**

(72) Inventor: **de la Haye, Robert**
**42 Springfield Crescent**
**Harpenden Hertfordshire AL5 4LH(GB)**
Inventor: **Matthews, John A.**
**65 Shefford Road**
**Clifton, Bedfordshire SG17 5R0(GB)**

(74) Representative: **Thomson, Roger Bruce**
**W P THOMPSON & CO, Eastcheap House,**
**Central Approach**
**Letchworth Hertfordshire SG6 3DS(GB)**

(54) **Furniture.**

(57) A corner fillet (16) for the securing together of two mutually perpendicular panels (10,11) of an article of furniture is securable by fastening means to each of the panels independently. In an article of furniture having panels joined by such corner fillets (16) the fastening means are offset relative to each other from one corner fillet to the next thereby to ensure that the panels and corner fillets can only be assembled in one predetermined configuration. The fillets (16) preferably have rebates (18) along each external edge bordering the adjacent panels.

Fig.1.

EP 0 420 676 A2

## FURNITURE

This invention relates to furniture, and is particularly concerned with items of furniture which are designed for self-assembly. The invention is more particularly concerned with methods of and means for securing the panels of self-assembly furniture together.

In conventional self-assembly furniture, made up from a number of panels and customarily sold in packs, various methods are used to secure the panels together. In some items of furniture the panels are simply set at right angles to each other and are secured by glueing, or by screws or alternative fastenings through the butt joint. However, this is aesthetically unattractive and does not give a particularly strong joint.

It is an object of the present invention to provide an improved corner fitting for items of furniture which not only gives an aesthetically pleasing appearance at the corner but also enables a strong connection to be achieved between the adjacent panels.

In accordance with one aspect of the present invention there is provided a corner fillet for the securing together of two mutually perpendicular panels of a piece of furniture, the corner fillet being securable to each of said panels independently.

Preferably, the corner fillet includes a rebate along its external edges which are adjacent to the respective panels.

In accordance with another aspect of the present invention there is provided an article of furniture comprising a plurality of panels which define an outer frame of the article of furniture, wherein said panels have corner fillets between respective adjacent panels with fastening means between the panels and the corner fillets such that each of said fillets is securable to each of its adjacent panels independently.

Preferably, the fastening means are offset relative to each other from one corner fillet to the next thereby to ensure that the panels and corner fillets can only be assembled in one predetermined configuration.

In order that the invention may be more fully understood, one presently preferred embodiment of the invention will now be described by way of example and with reference to the accompanying drawings, in which:

Fig. 1 is a partial view showing the connection of two panels by a corner fillet in accordance with the invention;

Fig. 2A is a sectional view illustrating the method of connection of the corner fillet to the panels;

Fig. 2B is a view taken in the direction of the arrow B in Fig. 2A;

Fig. 3 shows further views of the corner fillet, and

Fig. 4 is a front view of an assembled article of furniture illustrating the use of the corner fillets in accordance with the invention.

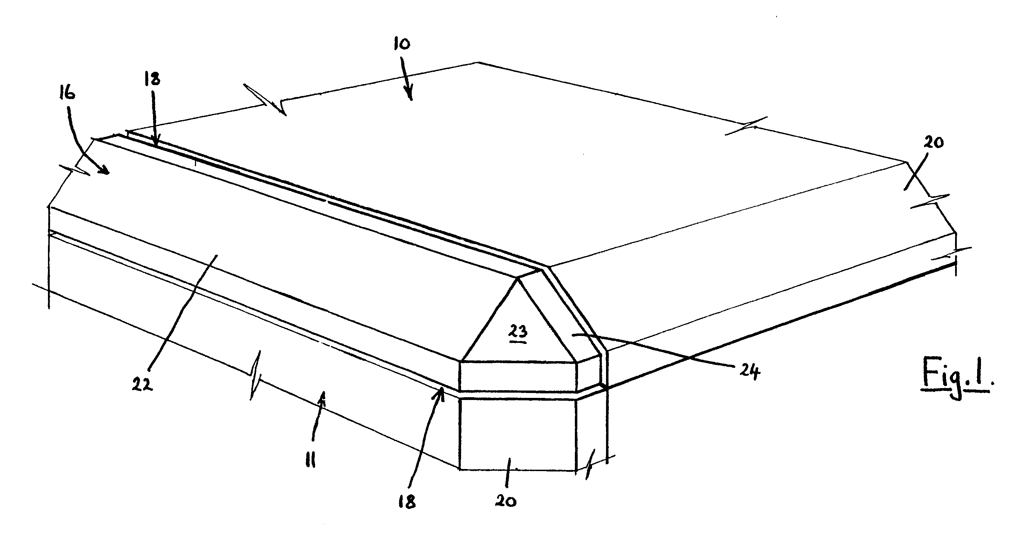

Referring to the drawings, Fig. 4 shows a TV-video unit as an article of self-assembled furniture made up from individual outer panels 10, 11, 12 and 13, doors 14 and 15, etc. The individual panels 10 to 13 are connected together by respective corner fillets 16, four such fillets being shown for this article of furniture. In the unit shown in Fig. 4 the corner fillets 16 are dimensioned and shaped so that their external faces lie flush with and tight against the faces of the adjacent panels 10 to 13. Although such fillets are within the scope of the present invention, it is preferred to use the type of corner fillet as shown in Figs. 1 to 3 of the drawings. These corner fillets 16 incorporate a rebate, indicated at 18, along each fillet edge which is adjacent to an external face of the adjacent panel. These rebates 18 are relatively shallow grooves in the material of the fillets 16. The advantage of using fillets rebated in this way is that one thereby overcomes the problem of ensuring that the corner fillets and panels lie truly flush with each other with no "step" between the adjacent surfaces. The use of a rebated fillet gives a greater tolerance in the assembly, does not detract from the strength of the joint, and gives an aesthetically pleasing appearance to the assembled article. Even if the external surfaces of the corner fillet and of the adjacent panels are not exactly true to each other, the provision of the rebates 18 will disguise this.

In the drawings the panels, e.g. 10 and 11, are shown with chamfered front faces 20. Similarly, the corner fillets 16 are provided with chamfered faces 22, 23 and 24. Alternatively, these chamfered faces could be replaced by curved faces.

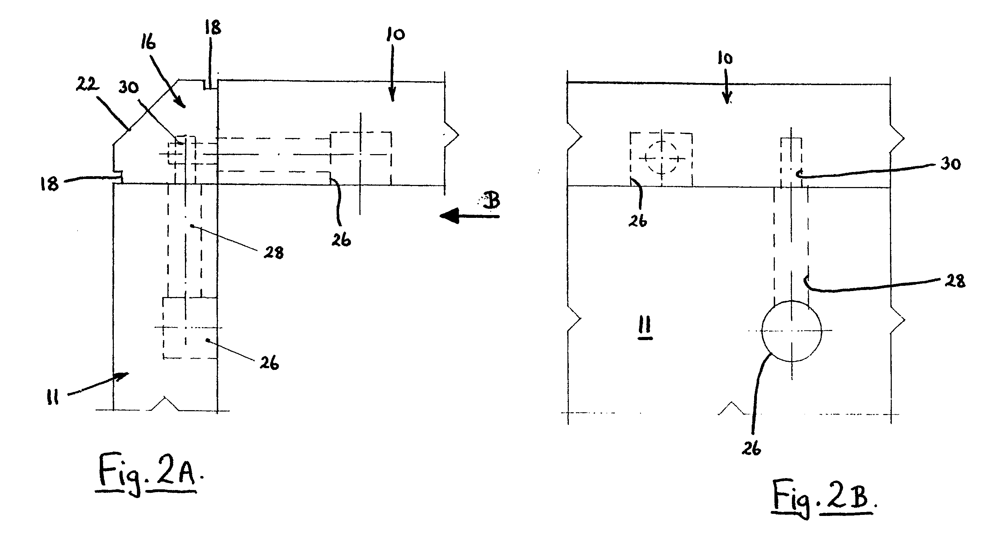

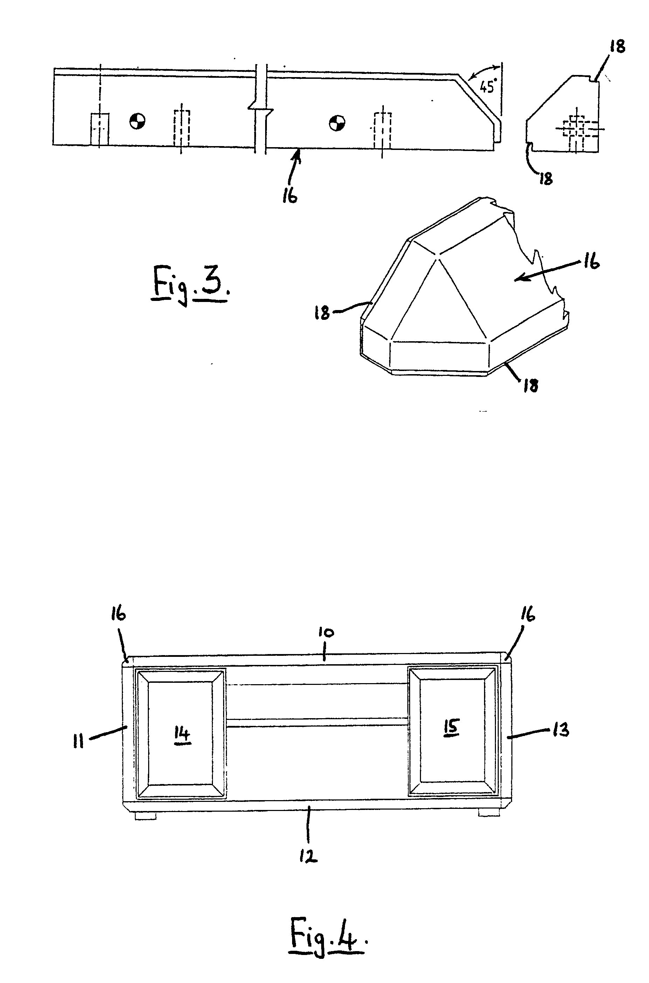

The interconnection of the panels 10 to 13 and the corner fillets 16 is preferably by way of internal screw fastenings, as shown in Figs. 2A, 2B and 3. As shown in Figs. 2A and 2B the panels 10 and 11 are provided with cylindrical bores 26 in the internal faces of the panels. These bores 26 connect with cylindrical holes 28 which extend at right-angles to the bores 26 to the end face of the panel. A matching 35 recess 30 is bored in the corner fillet 16 to receive a grubscrew (not shown). The bore 26 receives a rotatable cylinder (not shown), the rotation of which operates through the fastening mechanism to rotate the grubscrew and tighten the corner fillet against the panel.

It is a feature of the invention that these individual fastening means between the corner fillets and the panels are not set at the same positions at each corner of the article of furniture. The positions of the respective bores are differently offset from corner to corner so that the person assembling the article of furniture can only assemble the pieces in one, predetermined configuration. In other words, the individual pieces are "coded" for correct assembly. It should be understood that alternative methods of securing the panels to the corner fillets may be used, within the scope of the present invention.

It should also be understood that it is not essential that these corner fillets 16 are used at all corners of an article of furniture. For example, the bottom corners of an article of furniture such as is shown in Fig. 4 may be differently designed. It would be possible for example to incorporate a base plate which extends sufficiently to underlie the side panels in order to assist in the distribution of the weight of the article of furniture.

It should also be understood that the present invention is not limited to the use of any particular materials. The principles of the present invention are applicable to any materials.

## Claims

1. A corner fillet for the securing together of two mutually perpendicular panels (10,11) of a piece of furniture, the corner fillet (16) being securable to each of said panels independently.

2. A corner fillet as claimed in claim 1, characterised in that the fillet has two plane faces respectively for contact with end faces of the two panels, and each plane face has at least one recess (30) to receive screw means, said at least one recess in one of said faces being perpendicular to said at least one recess in the other of said faces.

3. A corner fillet as claimed in claim 1 or 2, characterised in that the fillet has rebates (18) along each external edge adjacent to said panels.

4. An article of furniture comprising a plurality of panels (10, 11, 12, 13) which define an outer frame of the article, characterised in that the panels have corner fillets (16) between respective adjacent panels, with fastening means between the panels and the corner fillets such that each of said fillets is securable to each of its adjacent panels independently.

5. An article of furniture as claimed in claim 4, characterised in that the fastening means are offset relative to each other from one corner fillet to the next thereby to ensure that the panels and corner fillets can only be assembled in one predetermined configuration.

6. An article of furniture as claimed in claim 4 or 5, characterised in that each fillet (16) has two plane faces respectively for contact with end faces of its two adjacent panels, and each plane face has at least one recess (30) to receive said fastening means, said at least one recess in one of said faces being perpendicular to said at least one recess in the other of said faces.

7. An article of furniture as claimed in claim 4, 5 or 6, characterised in that each fillet (16) has rebates (18) along each external edge bordering its adjacent panels.

8. An article of furniture as claimed in any of claims 4 to 7, characterised in that the internal face of each panel (10,11,12,13) has at least one recess (26) adjacent to the neighbouring corner fillet (16), each said recess (26) connecting with a bore (28) extending at right-angles to the recess to the end face of the panel, and said fastening means being fitted within said recesses (26) and bores (28).

Fig.1.

EP 0 420 676 A2

Fig. 2B.

Fig. 2A.

EP 0 420 676 A2

Fig.3.

Fig.4.

6